# EUROPÄISCHE PATENTSCHRIFT

(11) **EP 3 550 115 B1**
(45) Veröffentlichungstag und Bekanntmachung des Hinweises auf die Patenterteilung: **02.06.2021**
(21) Anmeldenummer: 19166940.7
(22) Anmeldetag: 03.04.2019
(51) Int. Cl.: F02B 33/22, F02B 33/30, F01L 1/26, F02D 17/02, F01L 1/14, F01L 1/18, F01L 23/00, F01L 1/46, F01L 13/00, F01L 3/24, F02D 13/02, F02D 13/06, F01L 3/20

(54) **VORRICHTUNG ZUR DRUCKLUFTERZEUGUNG FÜR EINE BRENNKRAFTMASCHINE MIT EINEM ZUSATZVENTIL**
DEVICE FOR THE PRODUCTION OF COMPRESSED AIR FOR A COMBUSTION ENGINE WITH AN AUXILIARY VALVE
DISPOSITIF DE GÉNÉRATION D'AIR COMPRIMÉ POUR UN MOTEUR À COMBUSTION INTERNE DOTÉ D'UNE SOUPAPE AUXILIAIRE

(30) Priorität: 05.04.2018 DE 102018108008
(43) Veröffentlichungstag der Anmeldung: 09.10.2019
(73) Patentinhaber: MAN Truck & Bus SE, 80995 München (DE)
(72) Erfinder: Malischewski, Thomas, 91560 Heilsbronn (DE); Hirschmann, Steffen, 91413 Neustadt an der Aisch (DE); Renner, Dominik, 91522 Ansbach (DE)
(74) Vertreter: v. Bezold & Partner Patentanwälte - PartG mbB

(56) Entgegenhaltungen:
- DE-A1-102012 206 552
- DE-A1-102014 116 913
- JP-A- S 606 026
- JP-U- S59 102 958
- US-A1- 2008 087 257

## Beschreibung

Die Erfindung betrifft eine Zylindereinheit für eine Brennkraftmaschine für ein Kraftfahrzeug, insbesondere ein Nutzfahrzeug.

Insbesondere in der Nutzfahrzeugtechnik werden pneumatische Einrichtungen, z. B. pneumatische Bremsen, verwendet, zu deren Betätigung Druckluft erforderlich ist. Herkömmlich wird die Druckluft mittels eines separaten Luftverdichters bereitgestellt. Es ist allerdings auch bekannt, Druckluft aus den Zylindern einer Brennkraftmaschine zu entnehmen.

Aus der DE 198 49 914 C1 ist eine Brennkraftmaschine mit einem separat betätigbaren Zusatzventil im Zylinderkopf bekannt. Die mehrzylindrige Brennkraftmaschine besitzt je Zylinder mindestens einen Einlasskanal und ein Einlassventil, einen Auslasskanal und ein Auslassventil und mindestens ein separat betätigbares Zusatzventil, das im Zylinderkopf der Brennkraftmaschine angeordnet ist.

Weitere Brennkraftmaschinen mit einem Zusatzventil bzw. Hilfsventil sind bspw. aus der DE 10 2014 116913 A1, der US 2008/087257 A1, der JP S59 102958 U und der DE 10 2012 206552 A1 bekannt.

Nachteilig an bekannten Lösungen kann bspw. der steuerungstechnische Aufwand zum Betätigen des Zusatzventils sein.

Der Erfindung liegt die Aufgabe zu Grunde, eine alternative und/oder verbesserte Vorrichtung zur Drucklufterzeugung zu schaffen, die insbesondere Nachteile im Stand der Technik überwindet. Insbesondere soll eine einfache und sichere Betätigung des Zusatzventils ermöglicht werden.

Die Aufgabe wird gelöst durch die Merkmale gemäß dem unabhängigen Anspruch 1. Vorteilhafte Weiterbildungen sind in den abhängigen Ansprüchen und der Beschreibung angegeben.

Die Erfindung schafft eine Vorrichtung zur Drucklufterzeugung für eine Brennkraftmaschine für ein Kraftfahrzeug, insbesondere ein Nutzfahrzeug. Die Vorrichtung weist mehrere Gaswechselventile (z. B. ein oder mehrere Einlassventile und/oder ein oder mehrere Auslassventile) zum Zuführen von Verbrennungsluft (z. B. über einen oder mehrere Einlasskanäle) zu einer Zylindereinheit der Brennkraftmaschine und Abführen von Abgas aus der Zylindereinheit (z. B. über einen oder mehrere Auslasskanäle) auf. Die Vorrichtung weist ein Zusatzventil zum (insbesondere selektiven und/oder gesteuerten) Entnehmen von Druckluft aus der Zylindereinheit (z. B. mittels eines Druckluftkanals) auf. Die Vorrichtung weist einen (z. B. mechanischen) Ventiltrieb (z. B. Ventiltrieb mit Nockenwelle) auf. Der Ventiltrieb steht in Wirkverbindung mit mindestens einem Einlassventil, der mehreren Gaswechselventile zum Betätigen (z. B. Öffnen und/oder Schließen) des mindestens einen Gaswechselventils. Der Ventiltrieb steht auch in Wirkverbindung mit dem Zusatzventil zum Betätigen (z. B. Öffnen und/oder Schließen) des Zusatzventils.

Zweckmäßig wird das Zusatzventil somit nicht separat betätigt. Stattdessen wird vorgeschlagen, dass das Zusatzventil mittels eines ohnehin vorhandenen Ventiltriebs betätigt wird. Der Ventiltrieb dient somit sowohl zum Betätigen mindestens eines Gaswechselventils als auch zum Betätigen des Zusatzventils. Es ist daher lediglich notwendig, den Ventiltrieb zum zusätzlichen Betätigen des Zusatzventils zu modifizieren. Auf eine separate Ansteuerung des Zusatzventils, die mit einem entsprechenden Integrationsaufwand und Ansteuerungsaufwand verbunden ist, kann somit verzichtet werden.

Insbesondere kann das Zusatzventil separat zu den Gaswechselventilen und/oder in einem Zylinderkopf der Zylindereinheit angeordnet sein.

Zweckmäßig kann das Zusatzventil eine Fluidverbindung zu einen Druckluftkanal stromabwärts des Zusatzventils öffnen und schließen. Insbesondere kann der Druckluftkanal separat zu mindestens einem Einlasskanal, über den Verbrennungsluft zugeführt wird und der von mindestens einem Einlassventil verschließbar ist, und/oder zu mindestens einem Auslasskanal, über den Abgas aus der Zylindereinheit abgeführt wird und der von mindestens einem Auslassventil verschließbar ist, ausgebildet sein.

Beispielsweise kann das Zusatzventil einen Druckluftkanal, insbesondere in einem Zylinderkopf der Zylindereinheit, mit einer Verbrennungskammer der Zylindereinheit selektiv in Fluidverbindung setzen.

Es ist möglich, dass das Zusatzventil dazu ausgebildet ist, sich (z. B. einen Ventilteller des Zusatzventils) in eine Verbrennungskammer der Zylindereinheit hinein zu öffnen.

Es ist möglich, dass das Zusatzventil neben und/oder zwischen den Gaswechselventilen angeordnet ist.

In einem bevorzugten Ausführungsbeispiel steht der Ventiltrieb mit mindestens einem Einlassventil der mehreren Gaswechselventile in Wirkverbindung. Alternativ oder zusätzlich ist der Ventiltrieb ein Einlassventil-Ventiltrieb und/oder das Zusatzventil und mindestens ein Einlassventil der mehreren Gaswechselventile sind durch den Ventiltrieb gemeinsam betätigbar. Erfindungsgemäß ist das Zusatzventil von einem Einlassventil-Kipphebel, einem Einlassventil-Schlepphebel oder einem Einlassventil-Stößel (z. B. unmittelbar oder mittelbar) betätigt. Damit kann zweckmäßig erreicht werden, dass insbesondere eine Öffnung des Zusatzventils in einem Einlasstakt realisiert wird, wie beim Einlassventil, das ebenfalls von dem Ventiltrieb betätigt wird.

Beispielsweise kann der Ventiltrieb dazu ausgebildet sein, ausschließlich das Zusatzventil und mindestens ein Einlassventil (zum Beispiel ein oder zwei Einlassventile) zu betätigen.

In einem weiteren bevorzugten Ausführungsbeispiel weist der Ventiltrieb eine Leerweg-Einrichtung ("Lost-Motion-Element") auf. Es ist möglich, dass die Leerweg-Einrichtung dazu ausgebildet ist, eine Betätigung des Zusatzventils durch den Ventiltrieb (z. B. selektiv) zu aktivieren, zu deaktivieren und/oder zuzuschalten. Alternativ oder zusätzlich kann die Leerweg-Einrichtung als eine hydraulische Leerweg-Einrichtung ausgebildet sein und/oder dazu ausgebildet sein, eine Betätigung des Zusatzventils durch den Ventiltrieb (z.B. selektiv) im nicht-befeuerten Betrieb der Zylindereinheit, im Leerlaufbetrieb der Zylindereinheit und/oder im befeuerten Betrieb der Zylindereinheit zu aktivieren, zu deaktivieren und/oder zuzuschalten. Die Leerweg-Einrichtung ermöglicht, dass das Zusatzventil nur betätigt wird, wenn dies tatsächlich gewünscht ist. Dies kann beispielsweise der Fall sein, wenn tatsächlich ein Druckluftbedarf besteht und/oder die Zylindereinheit gerade im Leerlauf und/oder nicht-befeuerten Betrieb betrieben wird.

Insbesondere kann die Leerweg-Einrichtung in einen Kipphebel, einen Schlepphebel oder einen Stößel des Ventiltriebs integriert und/oder mit diesem (z. B. unmittelbar oder mittelbar) verbunden sein.

In einem weiteren Ausführungsbeispiel ist das Zusatzventil von dem Ventiltrieb so betätigbar, dass es, insbesondere nur, im Einlasstakt öffnet. Das Zusatzventil kann von dem Ventiltrieb so betätigbar sein, dass es erst nach Beginn eines Einlasstaktes und/oder nach einem oberen Totpunkt einer Kolbenbewegung im Einlasstakt öffnet. Das Zusatzventil kann von dem Ventiltrieb so betätigbar sein, dass es erst nach mindestens einem Einlassventil der mehreren Gaswechselventile öffnet bzw. erst öffnet, nachdem mindestens das Einlassventil öffnet. Das Zusatzventil kann von dem Ventiltrieb so betätigbar sein, dass es erst nach einer Ventilüberschneidung der mehreren Gaswechselventile (Ventilüberschneidung zwischen Einlassventil(en) und Auslassventil(en)) öffnet. Eine Öffnung des Zusatzventils erst nach einer Ventilüberschneidung und/oder nach einem Öffnen eines Einlassventils kann ermöglichen, dass die Verbrennungskammer der Zylindereinheit bereits gespült ist und sich insbesondere kein Restgas (Abgas) mehr in der Verbrennungskammer befindet, die durch das geöffnete Zusatzventil strömen könnte. Dies kann insbesondere dann nützlich sein, wenn die Vorrichtung zur Drucklufterzeugung auch im befeuerter Betrieb der Zylindereinheit zum Erzeugen von Druckluft verwendet wird.

In einem bevorzugten Ausführungsbeispiel ist das Zusatzventil mechanisch öffenbar, insbesondere durch den Ventiltrieb, und/oder pneumatisch schließbar, insbesondere durch einen Zylinderdruck in der Zylindereinheit. Alternativ oder zusätzlich kann das Zusatzventil mechanisch und pneumatisch betätigbar sein.

In einer Ausführungsform weist die Vorrichtung ferner eine Arretierungsvorrichtung auf, durch die das Zusatzventil in einer Öffnungsstellung haltbar ist, insbesondere auch, wenn der Ventiltrieb das mindestens eine Einlassventil bereits schließt oder geschlossen hat. Damit wird insbesondere ermöglicht, dass das Zusatzventil beispielsweise am Ende des Einlasstaktes, wenn die Einlassventile schließen, geöffnet bleibt. Somit kann beispielsweise Druckluft, die im nachfolgenden Verdichtungstakt erzeugt wird, über das geöffnete Zusatzventil aus der Verbrennungskammer entnommen werden.

In einer weiteren Ausführungsform ist das Zusatzventil durch die Arretierungsvorrichtung so lange in der Öffnungsstellung haltbar, bis eine auf das Zusatzventil wirkende Kraft in Folge eines Zylinderdrucks in der Zylindereinheit (insbesondere in Kombination mit einer Rückstellkraft einer Ventilfeder des Zusatzventils) eine Arretierkraft der Arretierungsvorrichtung überwindet. Damit kann zweckmäßig erreicht werden, dass das Zusatzventil insbesondere in Abhängigkeit von dem Zylinderdruck geschlossen wird.

Insbesondere kann die auf das Zusatzventil wirkende Kraft eine Kraft sein, die auf einen Ventilteller des Zusatzventils wirkt.

In einer Weiterbildung ist die Arretierungsvorrichtung so ausgebildet, dass die Arretierkraft durch die auf das Zusatzventil wirkende Kraft in Folge eines Zylinderdrucks in der Zylindereinheit im Verdichtungstakt (insbesondere in Kombination mit einer Rückstellkraft einer Ventilfeder des Zusatzventils) überwindbar ist. Alternativ oder zusätzlich ist die Arretierungsvorrichtung so ausgebildet ist, dass die Arretierkraft durch die auf das Zusatzventil wirkende Kraft in Folge eines Zylinderdrucks in einem Bereich oberhalb von 12 bar, 15 bar, 18 bar, 20 bar, 22 bar und/oder 25 bar (insbesondere in Kombination mit einer Rückstellkraft einer Ventilfeder des Zusatzventils) überwunden wird. Damit kann das Zusatzventil zweckmäßig bei einem vorbestimmten Zylinderdruck vor dem Ende des Verdichtungstaktes selbsttätig schließen. Der Schließzeitpunkt des Zusatzventils wird somit insbesondere durch die Geometrie und Anordnung des Zusatzventils, insbesondere des Ventiltellers und der Arretierungsvorrichtung, bestimmt.

In einer bevorzugten Ausführungsvariante ist die Arretierungsvorrichtung so ausgebildet, dass sie das Zusatzventil immer beim gleichen (vorbestimmten) Zylinderdruck schließt. Alternativ oder zusätzlich ist die Arretierungsvorrichtung so ausgebildet, dass sie das Zusatzventil unabhängig von einer Drehzahl der Brennkraftmaschine, einem Ladedruck der Brennkraftmaschine und/oder einem Verdichtungsverhältnis der Zylindereinheit schließt.

In einer weiteren Ausführungsvariante weist die Arretierungsvorrichtung einen bewegbaren, insbesondere elastisch vorgespannten, Sperrkörper (z. B. eine Arretierkugel) auf. Alternativ oder zusätzlich weist die Arretierungsvorrichtung eine Ausnehmung und/oder eine Umfangsnut, insbesondere an einem Ventilschaft des Zusatzventils, auf. Zweckmäßig kann der Sperrkörper im Öffnungszustand des Zusatzventils zum Offenhalten des Zusatzventils in die Umfangsnut und/oder die Ausnehmung eingreifen.

Es ist möglich dass mehrere Sperrkörper (zum Beispiel zwei, drei oder vier Sperrkörper) vorgesehen sind, die in dieselbe oder verschiedene Ausnehmungen und/oder Umfangsnuten eingreifen können.

Alternativ oder zusätzlich kann eine Arretierkraft der Arretierungsvorrichtung eine (insbesondere definierte) Magnetkraft aufweisen und/oder die Arretierungsvorrichtung einen Magneten aufweisen. Bspw. kann am Zusatzventil, z. B. an einem Ventilschaft des Zusatzventils, ein ferromagnetischer Bereich (z. B. aus Eisen) und am Zylinderkopf ein Magnet (z. B. Permanentmagnet) vorgesehen sein. Eine umgekehrte Anordnung von ferromagnetischer Bereich und Magnet ist ebenfalls denkbar. Die Anordnung kann insbesondere unter Berücksichtigung von Festigkeitsüberlegungen vorgenommen werden.

In einem Ausführungsbeispiel ist ein durch das Zusatzventil öffenbarer Strömungsquerschnitt kleiner als ein durch das mindestens eine Einlassventil öffenbarer Strömungsquerschnitt. Alternativ oder zusätzlich ist das Zusatzventil kleiner als die mehreren Gaswechselventile und/oder ein Ventilteller des Zusatzventils ist kleiner als ein Ventilteller der mehreren Gaswechselventile.

In einem weiteren Ausführungsbeispiel öffnet das Zusatzventil zeitverzögert zu dem mindestens einen Einlassventil und/oder ein Hub (z. B. maximaler Ventilhub) das Zusatzventils ist kleiner ist als ein Hub (z. B. maximaler Ventilhub) des mindestens einen Einlassventils, das von dem Ventiltrieb betätigt wird. Der kleinere Hub des Zusatzventils kann dadurch ermöglicht werden, dass ein Druckluftbedarf geringer sein kann als ein Luftbedarf für die Verbrennung der Brennkraftmaschine. Der kleinere Ventilhub kann ermöglichen, dass das Zusatzventil verzögert zu dem mindestens einen Gaswechselventil, das ebenfalls von den Ventiltrieb betätigt wird, öffnet.

In einem weiteren Ausführungsbeispiel weist die Vorrichtung ein Rückschlagventil auf, das in Fluidverbindung stromabwärts von dem Zusatzventil vorgesehen ist. Das Rückschlagventil kann verhindern, dass Druckluft beispielsweise aus einem Druckluftspeicher stromabwärts des Rückschlagventils zurück durch ein geöffnetes Zusatzventil in die Verbrennungskammer strömt. Ferner liegt nicht ständig ein Druck des Druckluftspeichers an der Ventilschaftdichtung des Zusatzventils an. Eine Ventilfeder, die das Zusatzventil in Richtung zu einer Schließstellung vorspannt, um das Zusatzventil bei Nicht-Betätigung geschlossen zu halten, kann kleiner dimensioniert werden.

In einer weiteren Ausführungsform ist das Zusatzventil in Richtung zu einer Schließstellung, insbesondere mittels einer Ventilfeder, vorgespannt.

Es ist möglich, dass das Zusatzventil und/oder das Rückschlagventil in einem Zylinderkopf der Zylindereinheit angeordnet ist.

Der Ventiltrieb kann den ipphebel, den Schlepphebel oder den Stößel in Wirkverbindung zwischen einer Nockenwelle und dem Zusatzventil sowie dem mindestens einen Einlassventil aufweisen.

In einer weiteren Ausführungsform ist das Zusatzventil so angeordnet, dass es durch Kontakt mit einem Kolben der Zylindereinheit, der sich zu einem oberen Totpunkt einer Kolbenbewegung bewegt, aus einer Öffnungsstellung in Richtung zu einer Schließstellung bewegbar ist.

Dies kann beispielsweise in Situationen notwendig sein, in denen die Arretierungsvorrichtung eine Fehlfunktion aufweist.

Die Erfindung ist auch auf eine Brennkraftmaschine gerichtet. Die Brennkraftmaschine kann eine oder mehrere Vorrichtungen wie hierin offenbart aufweisen. Es ist möglich, dass das Zusatzventil in Fluidverbindung mit einem Druckluftspeicher steht.

Die Erfindung ist auch auf ein Kraftfahrzeug, insbesondere ein Nutzfahrzeug (zum Beispiel einen Omnibusse oder einen Lastkraftwagen), gerichtet. Das Kraftfahrzeug weist eine Brennkraftmaschine mit einer oder mehreren Vorrichtungen wie hierin offenbart auf. Optional kann das Kraftfahrzeug einen Druckluftspeicher, der in Fluidverbindung stromabwärts von dem Zusatzventil und/oder dem Rückschlagventil angeordnet ist, aufweisen.

Es ist auch möglich, die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine beispielhafte Zylinderdruckkurve eines Zylinders einer Brennkraftmaschine im Leerlauf;
- Figur 2: eine schematisch dargestellte beispielhafte Zylindereinheit gemäß der vorliegenden Offenbarung;
- Figur 3: eine perspektivische Ansicht eines Ventiltriebs der beispielhaften Zylindereinheit;
- Figur 4: eine Schnittdarstellung eines beispielhaften Zusatzventils in einer Schließstellung;
- Figur 5: eine Schnittdarstellung des beispielhaften Zusatzventils in einer Öffnungsstellung;
- Figur 6: eine Ventilsteuerkurve eines Einlassventils, eine Ventilsteuerkurve des bespielhaften Zusatzventils und eine beispielhafte Zylinderdruckkurve;
- Figur 7: eine schematische Darstellung einer beispielhaften Vorrichtung zur Drucklufterzeugung gemäß der vorliegenden Offenbarung; und
- Figur 8: eine Schnittdarstellung eines Rückschlagventils und des beispielhaften Zusatzventils.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

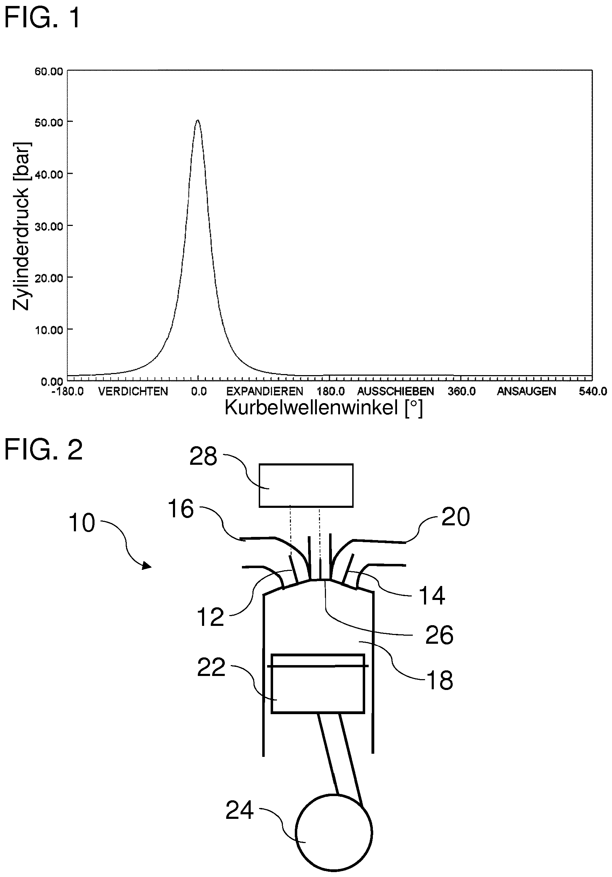

Die Figur 1 zeigt einen Zylinderdruckverlauf über einen Kurbelwellenwinkel einer Kurbelwelle. In Figur 1 ist gezeigt, dass sich während eines Leerlaufbetriebs einer Brennkraftmaschine im Verdichtungstakt ein relativer hoher Verdichtungsenddruck erzielen lässt. Der Verdichtungsenddruck kann zwischen beispielsweise 40 bar und 60 bar, insbesondere ungefähr 50 bar, betragen. Der Verdichtungsenddruck hängt insbesondere von dem Verdichtungsverhältnis und den Steuerzeiten der Gaswechselventile ab. Gemäß der vorliegenden Offenbarung wird vorgeschlagen, Druckluft aus der Brennkraftmaschine beispielsweise im Verdichtungstakt zu entnehmen. Die entnommene Druckluft sollte möglichst sauber sein, sodass die Entnahme im Verdichtungstakt gegenüber einer Entnahme bspw. im Verbrennungstakt zu bevorzugen ist.

Vorzugsweise ist der jeweilige Zylinder bei der Druckluftentnahme im Leerlaufbetrieb und/oder nicht befeuert. Es ist allerdings auch möglich, dass der Zylinder befeuert ist. Beispielsweise kann die entnommene Druckluft in einem Druckluftspeicher gespeichert und/oder (direkt oder indirekt) zu pneumatischen Einrichtungen weitergeleitet werden. Beispielsweise kann bei einem Nutzfahrzeug Druckluft in einem Bereich zwischen 8 bar und 12 bar zum Betreiben einer Vielzahl von pneumatische Einrichtungen, zum Beispiel pneumatisch betätigte Bremsen, verwendet werden.

Die Figur 2 zeigt eine schematische Zylindereinheit 10 einer Brennkraftmaschine. Die Zylindereinheit 10 ist zur Entnahme von Druckluft ausgebildet. Die Brennkraftmaschine kann beispielsweise in einem Kraftfahrzeug, insbesondere einem Nutzfahrzeug, umfasst sein. Das Nutzfahrzeug kann beispielsweise als ein Omnibus oder ein Lastkraftwagen ausgebildet sein. Die Brennkraftmaschine kann mehrere Zylindereinheiten 10 zur Entnahme von Druckluft aufweisen, insbesondere wenn ein hoher Bedarf an Druckluft besteht. Es ist allerdings auch möglich, dass die Brennkraftmaschine zwar mehrere Zylindereinheiten aufweist, davon allerdings nur eine Zylindereinheit gemäß der Zylindereinheit 10 zur Entnahme von Druckluft umfasst. Die Brennkraftmaschine kann beispielsweise eine Diesel-Brennkraftmaschine, eine Benzin-Brennkraftmaschine, eine Gas-Brennkraftmaschine oder eine Kombination davon sein.

Die Zylindereinheit 10 weist mehrere Gaswechselventile 12, 14 auf. Die Gaswechselventile 12, 14 umfassen mindestens ein Einlassventil 12, z. B. genau zwei Einlassventile 12, und mindestens ein Auslassventil 14, z. B. genau zwei Auslassventile 14. Das Einlassventil 12 kann eine Fluidverbindung zwischen einem Einlasskanal 16 und einer Verbrennungskammer 18 herstellen. Das Auslassventil 14 kann eine Fluidverbindung zwischen der Verbrennungskammer 18 und einem Auslasskanal 20 herstellen. Die Zylindereinheit 10 weist einen hin- und herbewegbaren Kolben 22 auf, der mit einer Kurbelwelle 24 verbunden ist.

Mittels eines Zusatzventils 26 der Zylindereinheit 10 kann Druckluft aus der Zylindereinheit 10 entnommen werden. Das Zusatzventil 26 kann, wie beispielsweise auch die Gaswechselventile 12, 14, in einem Zylinderkopf (nicht gesondert dargestellt) der Zylindereinheit 10 angeordnet sein.

Das Zusatzventil 26 ist nicht gesondert bzw. separat betätigt. Stattdessen wird das Zusatzventil 26 von einem Ventiltrieb 28 betätigt, der auch mindestens eines der Gaswechselventile 12, 14 betätigt. Wie dargestellt ist, kann der Ventiltrieb 28 zum Betätigen des mindestens einen Einlassventils 12 und des Zusatzventils 26 angeordnet sein. Beispielsweise kann der Ventiltrieb 28 so angeordnet sein, dass eine Wirkverbindung zwischen einer Nockenwelle (nicht dargestellt in Figur 2) und dem mindestens einen Einlassventil 12 sowie dem Zusatzventil 26 herstellbar ist. Zum Betätigen des mindestens einen Auslassventils 14 kann ein weiterer separater Ventiltrieb (nicht dargestellt) vorgesehen sein. Es ist möglich, dass der Ventiltrieb 28 ein variabler Ventiltrieb ist.

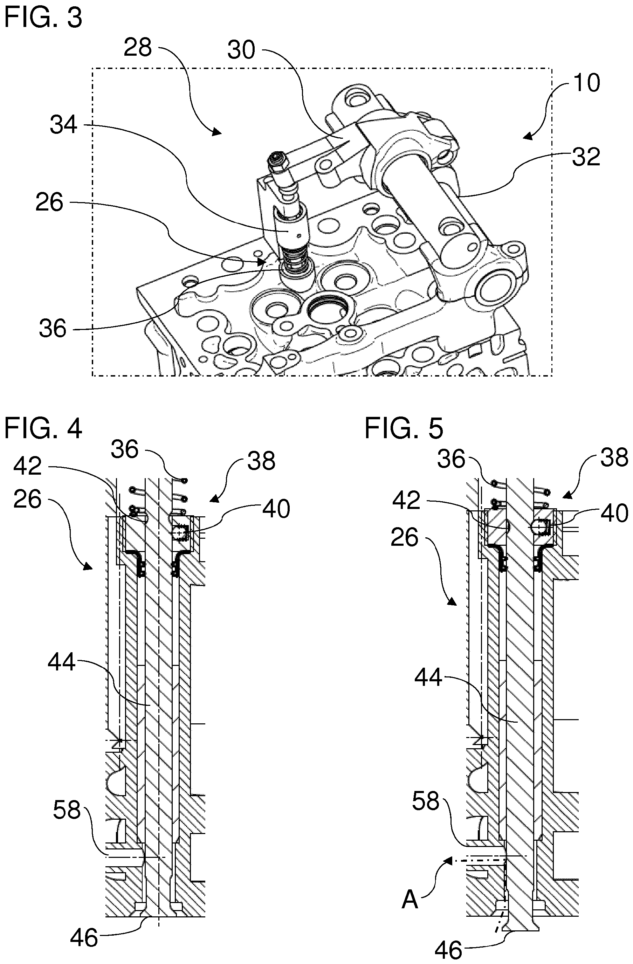

Die Figur 3 zeigt eine beispielhafte Ausgestaltung für den Ventiltrieb 28. Aus Gründen der Klarheit sind in Figur 3 keine Einlassventil und Auslassventile, sondern lediglich das Zusatzventil 26 gezeigt.

Der Ventiltrieb 28 weist einen Kipphebel 30 auf. Der Kipphebel 30 steht in Wirkverbindung zwischen einer Nockenwelle 32 und dem Zusatzventil 26. Es ist auch möglich, alternativ zu dem Kipphebel 30 ein anderes Kraftübertragungselement zwischen die Nockenwelle 32 und das Zusatzventil 26 zu schalten, zum Beispiel einen Schlepphebel oder einen Stößel.

Der Kipphebel 30 steht auch in Wirkverbindung mit dem mindestens einen Einlassventil 12 (siehe Figur 2). Bewirkt ein Nocken der Nockenwelle 32 ein Kippen des Kipphebels 30, so können sowohl das Zusatzventil 26 als auch das mindestens eine Einlassventil 12 (siehe Figur 2) betätigt werden. Das Zusatzventil 26 wird sozusagen über den Einlassventil-Kipphebel 30 mitgesteuert. Wie bereits erwähnt, besteht auch die Möglichkeit, dass das Zusatzventil über bspw. einen Einlassventil-Schlepphebel, -Stößel oder eine anderen Kraftübertragungseinrichtung, die zweckmäßig in Wirkverbindung zwischen einerseits der Nockenwelle und andererseits einem Einlassventil und dem Zusatzventil steht, betätigt wird.

Der Ventiltrieb 28 weist zudem eine Leerweg-Einrichtung (ein sogenanntes Lost-Motion-Element) 34 auf. Die Leerweg-Einrichtung 34 ist so angeordnet und ausgebildet, dass eine Betätigung des Zusatzventils 26 durch den Kipphebel bzw. das Kraftübertragungselement 30 kompensiert, das heißt verhindert, werden kann. Mittels der Leerweg-Einrichtung 34 kann das Zusatzventil 26 selektiv zugeschaltet werden. Im aktivierten Zustand der Leerweg-Einrichtung 34 wird beispielsweise das Zusatzventil 26 sowie das mindestens eine Einlassventil 12 von dem Ventiltrieb 28 gemäß einer Nockenkontur eines Nockens der Nockenwelle 32 betätigt. Im deaktivierten Zustand der Leerweg-Einrichtung 34, wird beispielsweise das Zusatzventil 26 nicht, aber das mindestens eine Einlassventil 12 betätigt. Die Leerweg-Einrichtung 34 kann eine Betätigung des Einlassventils 12 nicht verhindern. Die Leerweg-Einrichtung 34 kann beispielsweise zwischen dem Kipphebel bzw. dem Kraftübertragungselement 30 und dem Zusatzventil 26 angeordnet sein, wie dargestellt ist.

Die Leerweg-Einrichtung 34 kann beispielsweise eine hydraulische Leerweg-Einrichtung 34 sein. Die Leerweg-Einrichtung 34 kann einen hydraulisch beaufschlagbaren Druckraum, zum Beispiel eine Ölkammer, und einen verschiebbaren und/oder sperrbaren Kolben aufweisen. Ist beispielsweise eine Verschiebung des Kolbens aufgrund einer Druckbeaufschlagung des Druckraums gesperrt, wird das Zusatzventil 26 von den Ventiltrieb 28 betätigt. Ist beispielsweise eine Verschiebung des Kolbens freigegeben, da der Druckraum nicht mit einem Hydraulikfluid beaufschlagt ist, wird das Zusatzventil 26 von den Ventiltrieb 28 nicht betätigt (geöffnet). Stattdessen kann sich der Kolben in der Leerweg-Einrichtung 34 bewegen.

Das Zusatzventil 26 kann beispielsweise durch eine entsprechende Schaltung der Leerweg-Einrichtung 34 zugeschaltet werden, wenn ein Bedarf für Druckluft besteht. Vorzugsweise kann das Zusatzventil 26 in einem nicht-befeuerten Betrieb und/oder einem Leerlaufbetrieb der Zylindereinheit 10 zugeschaltet werden. Es ist allerdings auch möglich, dass das Zusatzventil 26, wenn gewünscht, in einem befeuerten Betrieb die Zylindereinheit 10 zugeschaltet wird.

Der Ventiltrieb 28, insbesondere das Zusatzventil 26, weist eine Ventilfeder 36 auf. Die Ventilfeder 36 kann das Zusatzventil 26 in Richtung zu einer Schließstellung des Zusatzventils 26 vorspannen. Dadurch kann das Zusatzventil 26 bei Nicht-Betätigung geschlossen gehalten werden.

Die Figuren 4 und 5 zeigen das Zusatzventil 26 in einer Schließstellung (Figur 4) und einer Öffnungsstellung (Figur 5). Das Zusatzventil 26 kann als ein Tellerventil ausgeführt sein.

Das Zusatzventil 26 weist eine Arretierungsvorrichtung 38 auf. Die Arretierungsvorrichtung 38 dient dazu, das Zusatzventil 26 offen zu halten, wenn das Einlassventil 12 (siehe Figur 2) bereits schließt. Die Arretierungsvorrichtung 38 dient ferner dazu, einen definierten Schließzeitpunkt für das Zusatzventil 26 vorzusehen. Die Arretierungsvorrichtung 38 kann beispielsweise in einem Zylinderkopf angeordnet sein.

Die Arretierungsvorrichtung 38 weist mindestens einen Sperrkörper 40 und eine Ausnehmung und/oder Umfangsnut 42, in die der Sperrkörper 40 eingreifen kann, auf. Der Sperrkörper 40 kann beispielsweise als eine Kugel ausgebildet sein. Der Sperrkörper 40 kann elastisch beaufschlagt, zum Beispiel federbeaufschlagt, insbesondere in einer Richtung zu der Umfangsnut 42 sein. Die Umfangsnut 42 kann in einem Ventilschaft 44 des Zusatzventils 26 vorgesehen sein.

In einer Schließstellung des Zusatzventils 26 (siehe Figur 4) ist der mindestens eine Sperrkörper 40 außer Eingriff mit der Umfangsnut 42. Wird das Zusatzventil 26 geöffnet, arretiert die Arretierungsvorrichtung 38 das Zusatzventil 26 in der Öffnungsstellung. Insbesondere greift der mindestens eine Sperrkörper 40 in die Umfangsnut 42 ein. Im Einzelnen wird der mindestens eine Sperrkörper 40 in Richtung zu der Umfangsnut 42 unter Wirkung beispielsweise einer Feder bewegt. Die Umfangsnut 42 und der mindestens eine Sperrkörper 40 sind so zueinander angeordnet, dass sie nur in einer Öffnungsstellung des Zusatzventils 26 in Eingriff miteinander bringbar sind.

Die Arretierungsvorrichtung 38 bewirkt eine Arretierkraft, die das Zusatzventil 26 in der Öffnungsstellung hält. Über die Arretierkraft und die Flächenverhältnisse am Ventilteller 46 des Zusatzventils 26 kann ein Zylinderdruck eingestellt werden, bei dem das Zusatzventil 26 wieder schließt. Hierdurch schließt das Zusatzventil 26 immer beim gleichen Zylinderdruck, unabhängig von einer Drehzahl, einem Ladedruck oder einem Verdichtungsverhältnis der Brennkraftmaschine. Beispielsweise kann die Arretierungsvorrichtung 38 so eingestellt sein, dass das Zusatzventil 26 bei einem vorbestimmten Zylinderdruck schließt, der größer als 12 bar ist, zum Beispiel in einem Bereich zwischen ungefähr 18 bar und ungefähr 25 bar, zum Beispiel bei ungefähr 20 bar. Im Öffnungszustand des Zusatzventils 26 kann Luft aus der Verbrennungskammer 18 (siehe Figur 2) entnommen und entlang des Pfeils A in einem Druckluftkanal 58 im Zylinderkopf geführt werden.

Es ist möglich, dass das Zusatzventil 26 so angeordnet ist, dass es in einer Öffnungsstellung durch einen Kontakt mit dem Kolben 22 (siehe Figur 2), der sich zu einem oberen Totpunkt bewegt, in Richtung zu einer Schließstellung bewegbar ist. Dies kann beispielsweise ein Schließen des Zusatzventils 26 ermöglichen, wenn die Arretierungsvorrichtung 38 eine Fehlfunktion aufweist.

Es ist möglich, dass ein Luftbedarf für Druckluft deutlich kleiner als ein Luftbedarf der Brennkraftmaschine zum Verbrennen von Kraftstoff ist. Dadurch kann beispielsweise das Zusatzventil 26 kleiner ausgestaltet sein als die Gaswechselventile 12, 14. Zum Beispiel kann ein Durchmesser des Ventiltellers 46 des Zusatzventils 26 in einem Bereich zwischen 10 mm und 14 mm liegen. Zum Beispiel kann ein Durchmesser eines Ventiltellers der Gaswechselventile 12, 14 zwischen 30 mm und 40 mm liegen.

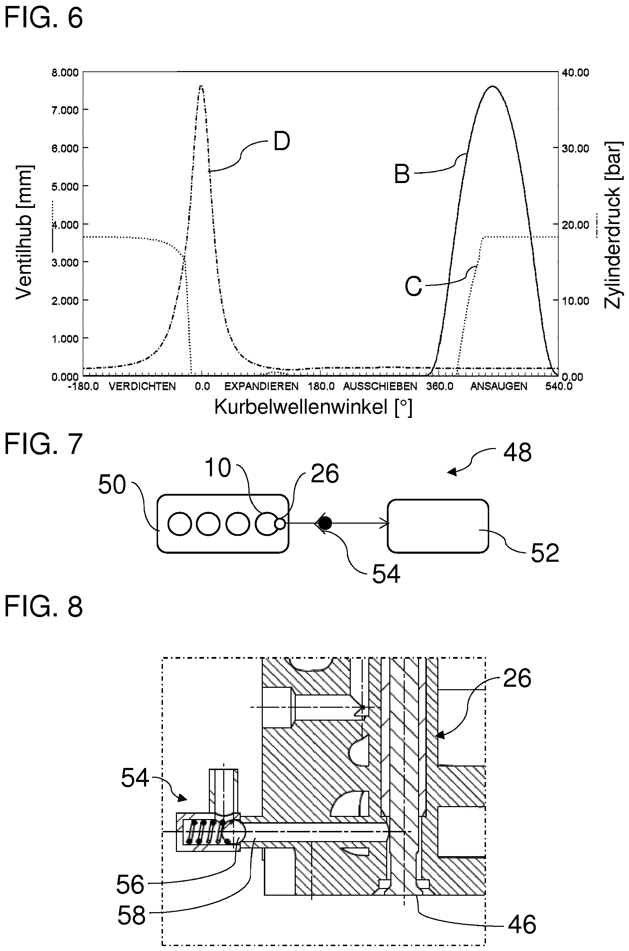

Die Figur 6 zeigt eine beispielhafte Ventilhubkurve des mindestens einen Einlassventils 12 (durchgezogene Kurve B), eine beispielhafte Ventilhubkurve des Zusatzventils 26 (gepunktete Kurve C) und einen beispielhaften Zylinderdruckverlauf (Strickpunkt-Kurve D). Die Ventilhubkurven B und C sowie der Zylinderdruckverlauf sind über einen Kurbelwellenwinkel der Brennkraftmaschine dargestellt.

In Figur 6 ist gezeigt, dass ein Ventilhub des Zusatzventils 26 (Kurve C) kleiner sein kann als ein Ventilhub des Einlassventils 12 (Kurve B). Dies kann beispielsweise auch dadurch ermöglicht werden, dass, wie bereits erwähnt, der Luftbedarf für Druckluft deutlich kleiner sein kann als der Luftbedarf der Brennkraftmaschine zum Verbrennen von Kraftstoff. Aufgrund des geringeren Ventilhubs öffnet das Zusatzventil 26 mit einem Zeitversatz zum Einlassventil 12, obwohl beide vom gleichen Ventiltrieb 28 betätigt werden. Hierdurch kann sich der Vorteil ergeben, dass kein Restgas in das Zusatzventil 26 strömen kann und somit nur vergleichsweise saubere Druckluft aus der Zylindereinheit 10 über das Zusatzventil 26 entnehmbar ist.

In der Figur 6 ist ferner beispielhaft gezeigt, dass das Zusatzventil 26 bei einem Zylinderdruck von ca. 18 bar selbsttätig schließt. Das heißt, in dem dargestellten Beispiel wird bei einem Zylinderdruck von 18 bar die von der Arretierungsvorrichtung 38 bewirkte Arretierkraft überwunden. Die Ventilfeder 36 bewegt das Zusatzventil 26 wieder in die Schließstellung.

Die Figur 7 zeigt einen schematischen Aufbau einer Vorrichtung 48 zur Erzeugung von Druckluft.

Die Vorrichtung 48 kann mit einer Brennkraftmaschine 50 gekoppelt oder Teil davon sein. Die Vorrichtung 48 kann eine Zylindereinheit 10 mit dem Zusatzventil 26 aufweisen. Wie bereits erwähnt, können auch mehrere Zylindereinheiten der Brennkraftmaschine 50 mit einem Zusatzventil versehen sein (nicht dargestellt).

Die Vorrichtung 48 kann zudem einen Druckluftspeicher 52, zum Beispiel einen Drucklufttank, aufweisen. In Fluidverbindung zwischen dem Zusatzventil 26 und dem Druckluftspeicher 52 kann ein Rückschlagventil 54 angeordnet sein. Das Rückschlagventil 54 kann verhindern, dass ein am Druckspeicher 52 anliegender Druck nicht ständig an einer Ventilschaftdichtung des Zusatzventils 26 anliegt. Weiterhin ermöglicht das Rückschlagventil 54, dass die Ventilfeder 36, die das Zusatzventil 26 bei Nicht-Betätigung geschlossen hält, deutlich kleiner ausgelegt werden kann.

Die Figur 8 zeigt eine beispielhafte Konfiguration für das Rückschlagventil 54.

Das Rückschlagventil 54 kann im Zylinderkopf der Zylindereinheit 10 angeordnet sein. Das Rückschlagventil 54 kann beispielsweise einen elastisch beaufschlagten, insbesondere federbeaufschlagten, Sperrkörper 56 aufweisen. Der Sperrkörper 56, z. B. eine Kugelsperrkörper, kann einen Druckluftkanal 58 stromabwärts des Zusatzventils 26 verschließen. Das Rückschlagventil 54 kann bei ausreichendem Zylinderdruck und geöffnetem Zusatzventil 26, insbesondere gegen den Druck stromabwärts des Rückschlagventils 54 (zum Beispiel Druck im Druckluftspeicher 52), geöffnet werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen, der von den beigefügten Ansprüchen definiert wird.

### Bezugszeichenliste

- 10: Zylindereinheit
- 12: Einlassventil (Gaswechselventil)
- 14: Auslassventil (Gaswechselventil)
- 16: Einlasskanal
- 18: Verbrennungskammer
- 20: Auslasskanal
- 22: Kolben
- 24: Kurbelwelle
- 26: Zusatzventil
- 28: Ventiltrieb
- 30: Kipphebel (Kraftübertragungselement)
- 32: Nockenwelle
- 34: Leerweg-Einrichtung
- 36: Ventilfeder
- 38: Arretierungsvorrichtung
- 40: Sperrkörper
- 42: Umfangsnut
- 44: Ventilschaft
- 46: Ventilteller
- 48: Vorrichtung zur Drucklufterzeugung
- 50: Brennkraftmaschine
- 52: Druckluftspeicher
- 54: Rückschlagventil
- 56: Sperrkörper
- 58: Druckluftkanal

- A: Druckluftströmung
- B: Einlassventilhubkurve
- C: Zusatzventilhubkurve
- D: Zylinderdruckverlauf

## Patentansprüche

1. Vorrichtung zur Drucklufterzeugung für eine Brennkraftmaschine (50) für ein Kraftfahrzeug, insbesondere ein Nutzfahrzeug, aufweisend:
mehrere Gaswechselventile (12, 14) zum Zuführen von Verbrennungsluft zu einer Zylindereinheit (10) der Brennkraftmaschine (50) und Abführen von Abgas aus der Zylindereinheit (10);
ein Zusatzventil (26) zum Entnehmen von Druckluft aus der Zylindereinheit (10); und
einen Ventiltrieb (28), der in Wirkverbindung mit mindestens einem Einlassventil (12) der mehreren Gaswechselventile (12, 14) zum Betätigen des mindestens einen Einlassventils (12) und in Wirkverbindung mit dem Zusatzventil (26) zum Betätigen des Zusatzventils (26) steht,
**dadurch gekennzeichnet, dass**
das Zusatzventil (26) von einem Einlassventil-Kipphebel, einem Einlassventil-Schlepphebel oder einem Einlassventil-Stößel betätigt ist.

2. Vorrichtung nach Anspruch 1, wobei:
das Zusatzventil (26) und mindestens das Einlassventil (12) der mehreren Gaswechselventile (12, 14) durch den Ventiltrieb (28) gemeinsam betätigbar sind.

3. Vorrichtung nach Anspruch 1 oder Anspruch 2, wobei der Ventiltrieb (28) eine Leerweg-Einrichtung (34) aufweist, die:
dazu ausgebildet ist, eine Betätigung des Zusatzventils (26) durch den Ventiltrieb (28) zu aktivieren, zu deaktivieren und/oder zuzuschalten; und/oder
als eine hydraulische Leerweg-Einrichtung ausgebildet ist; und/oder
dazu ausgebildet ist, eine Betätigung des Zusatzventils (26) durch den Ventiltrieb (28) im nicht-befeuerten Betrieb der Zylindereinheit (10), im Leerlaufbetrieb der Zylindereinheit (10) und/oder im befeuerten Betrieb der Zylindereinheit (10) zu aktivieren, zu deaktivieren und/oder zuzuschalten.

4. Vorrichtung nach einem der vorherigen Ansprüche, wobei:
das Zusatzventil (26) von dem Ventiltrieb (28) so betätigbar ist, dass es, insbesondere nur, im Einlasstakt öffnet; und/oder
das Zusatzventil (26) von dem Ventiltrieb (28) so betätigbar ist, dass es erst nach Beginn eines Einlasstaktes und/oder nach einem oberen Totpunkt einer Kolbenbewegung im Einlasstakt öffnet; und/oder
das Zusatzventil (26) von dem Ventiltrieb (28) so betätigbar ist, dass es erst nach mindestens dem Einlassventil (12) der mehreren Gaswechselventile (12, 14) öffnet; und/oder
das Zusatzventil (26) von dem Ventiltrieb (28) so betätigbar ist, dass es erst nach einer Ventilüberschneidung der mehreren Gaswechselventile (12, 14) öffnet.

5. Vorrichtung nach einem der vorherigen Ansprüche, wobei:
das Zusatzventil (26) pneumatisch schließbar ist, insbesondere durch einen Zylinderdruck in der Zylindereinheit (10); und/oder
das Zusatzventil (26) mechanisch und pneumatisch betätigbar ist.

6. Vorrichtung nach einem der vorherigen Ansprüche, ferner aufweisend:
eine Arretierungsvorrichtung (38), durch die das Zusatzventil (26) in einer Öffnungsstellung haltbar ist, insbesondere auch, wenn der Ventiltrieb (28) das mindestens eine Einlasventil (12) bereits schließt oder geschlossen hat.

7. Vorrichtung nach Anspruch 6, wobei:
das Zusatzventil (26) durch die Arretierungsvorrichtung (38) so lange in der Öffnungsstellung haltbar ist, bis eine auf das Zusatzventil (26) wirkende Kraft in Folge eines Zylinderdrucks in der Zylindereinheit (10) eine Arretierkraft der Arretierungsvorrichtung (38) überwindet; und/oder
die Arretierungsvorrichtung (38) so ausgebildet ist, dass eine Arretierkraft durch die auf das Zusatzventil (26) wirkende Kraft in Folge eines Zylinderdrucks in der Zylindereinheit (10) im Verdichtungstakt überwindbar ist; und/oder
die Arretierungsvorrichtung (38) so ausgebildet ist, dass eine Arretierkraft durch die auf das Zusatzventil (26) wirkende Kraft in Folge eines Zylinderdrucks in einem Bereich oberhalb von 12 bar, 15 bar, 18 bar, 20 bar, 22 bar und/oder 25 bar überwunden wird.

8. Vorrichtung nach Anspruch 6 oder Anspruch 7, wobei:
die Arretierungsvorrichtung (38) so ausgebildet ist, dass sie das Zusatzventil (26) immer beim gleichen Zylinderdruck schließt; und/oder
die Arretierungsvorrichtung (38) so ausgebildet ist, dass sie das Zusatzventil (26) unabhängig von einer Drehzahl der Brennkraftmaschine (50), einem Ladedruck der Brennkraftmaschine (50) und/oder einem Verdichtungsverhältnis der Zylindereinheit (10) schließt.

9. Vorrichtung nach einem der Ansprüche 6 bis 8, wobei die Arretierungsvorrichtung (38) aufweist:
einen bewegbaren, insbesondere elastisch vorgespannten, Sperrkörper (40); und
eine Ausnehmung und/oder eine Umfangsnut (42), insbesondere an einem Ventilschaft (44) des Zusatzventils (26), in die der Sperrkörper (40) im Öffnungszustand des Zusatzventils (26) zum Offenhalten des Zusatzventils (26) eingreift; und/oder
eine Arretierkraft der Arretierungsvorrichtung eine Magnetkraft aufweist und/oder die Arretierungsvorrichtung einen Magneten aufweist.

10. Vorrichtung nach einem der vorherigen Ansprüche, wobei:
ein durch das Zusatzventil (26) öffenbarer Strömungsquerschnitt kleiner als ein durch das mindestens eine Einlassventil (12) öffenbarer Strömungsquerschnitt ist; und/oder
das Zusatzventil (26) kleiner als die mehreren Gaswechselventile (12, 14) ist; und/oder
ein Ventilteller (46) des Zusatzventils (26) kleiner als ein Ventilteller der mehreren Gaswechselventile (12, 14) ist.

11. Vorrichtung nach einem der vorherigen Ansprüche, wobei:
das Zusatzventil (26) zeitverzögert zu dem mindestens einen Einlassventil (12) öffnet; und/oder
ein Hub das Zusatzventils (26) kleiner ist als ein Hub des mindestens einen Einlassventils (12), das von dem Ventiltrieb (28) betätigt wird.

12. Vorrichtung nach einem der vorherigen Ansprüche, wobei:
ein Rückschlagventil (54), das in Fluidverbindung stromabwärts von dem Zusatzventil (26) vorgesehen ist.

13. Vorrichtung nach einem der vorherigen Ansprüche, wobei:
das Zusatzventil (26) in Richtung zu einer Schließstellung, insbesondere mittels einer Ventilfeder (36), vorgespannt ist; und/oder
das Zusatzventil (26) und/oder das Rückschlagventil (54) in einem Zylinderkopf der Zylindereinheit (10) angeordnet ist; und/oder
der Ventiltrieb (28) den Kipphebel (30), den Schlepphebel oder den Stößel in Wirkverbindung zwischen einer Nockenwelle (32) und dem Zusatzventil (26) sowie dem mindestens einen Einlassventil (12) (12) aufweist.

14. Vorrichtung nach einem der vorherigen Ansprüche, wobei:
das Zusatzventil (26) so angeordnet ist, dass es durch Kontakt mit einem Kolben (22) der Zylindereinheit (10), der sich zu einem oberen Totpunkt einer Kolbenbewegung bewegt, aus einer Öffnungsstellung in Richtung zu einer Schließstellung bewegbar ist.

15. Kraftfahrzeug, insbesondere Nutzfahrzeug, aufweisend:
eine Brennkraftmaschine (50) mit einer oder mehreren Vorrichtungen nach einem der vorherigen Ansprüche; und optional:
einen Druckluftspeicher (52), der in Fluidverbindung stromabwärts von dem Zusatzventil (26) und/oder dem Rückschlagventil (54) angeordnet ist.

## Claims

1. A device for generating compressed air for an internal combustion engine (50) for a motor vehicle, in particular a utility vehicle, having:
multiple gas exchange valves (12, 14) for the feed of combustion air to a cylinder unit (10) of the internal combustion engine (50) and the discharge of exhaust gas from the cylinder unit (10);
an additional valve (26) for the extraction of compressed air from the cylinder unit (10); and
a valve drive (28) which is operatively connected to at least one inlet valve (12) of the multiple gas exchange valves (12, 14) for the purposes of actuating the at least one inlet valve (12) and which is operatively connected to the additional valve (26) for the purposes of actuating the additional valve (26),
**characterized in that**
the additional valve (26) is actuated by an inlet valve rocker lever, an inlet valve finger-type rocker or an inlet valve tappet.

2. The device according to Claim 1, wherein:
the additional valve (26) and at least the inlet valve (12) of the multiple gas exchange valves (12, 14) are actuatable jointly by the valve drive (28).

3. The device according to Claim 1 or Claim 2, wherein the valve drive (28) has an idle travel device (34) which:
is designed to activate, deactivate and/or switch on an actuation of the additional valve (26) by the valve drive (28); and/or
is designed as a hydraulic idle travel device; and/or
is designed to activate, deactivate and/or switch on an actuation of the additional valve (26) by the valve drive (28) in non-fired operation of the cylinder unit (10), in idle operation of the cylinder unit (10) and/or in fired operation of the cylinder unit (10).

4. The device according to any of the preceding claims, wherein:
the additional valve (26) is actuatable by the valve drive (28) so as to open in particular only in the inlet stroke; and/or
the additional valve (26) is actuatable by the valve drive (28) so as to open only after the start of an inlet stroke and/or after a top dead centre of a piston movement in the inlet stroke; and/or
the additional valve (26) is actuatable by the valve drive (28) so as to open only after at least the inlet valve (12) of the multiple gas exchange valves (12, 14); and/or
the additional valve (26) is actuatable by the valve drive (28) so as to open only after a valve overlap of the multiple gas exchange valves (12, 14).

5. The device according to any of the preceding claims, wherein:
the additional valve (26) is pneumatically closable, in particular by a cylinder pressure in the cylinder unit (10); and/or
the additional valve (26) is mechanically and pneumatically actuatable.

6. The device according to any of the preceding claims, furthermore having:
an arresting device (38) by means of which the additional valve (26) can be held in an open position, in particular even if the valve drive (28) is already closing or has already closed the at least one inlet valve (12).

7. The device according to Claim 6, wherein:
the additional valve (26) can be held in the open position by the arresting device (38) until such time as a force acting on the additional valve (26) owing to a cylinder pressure in the cylinder unit (10) overcomes an arresting force of the arresting device (38); and/or
the arresting device (38) is designed such that an arresting force can be overcome by the force acting on the additional valve (26) owing to a cylinder pressure in the cylinder unit (10) in the compression stroke; and/or
the arresting device (38) is designed such that an arresting force is overcome by the force acting on the additional valve (26) owing to a cylinder pressure in a range above 12 bar, 15 bar, 18 bar, 20 bar, 22 bar and/or 25 bar.

8. The device according to Claim 6 or Claim 7, wherein:
the arresting device (38) is designed so as to close the additional valve (26) always in the presence of the same cylinder pressure; and/or
the arresting device (38) is designed so as to close the additional valve (26) independently of a rotational speed of the internal combustion engine (50), a charge pressure of the internal combustion engine (50) and/or a compression ratio of the cylinder unit (10).

9. The device according to any of Claims 6 to 8, wherein the arresting device (38) has:
a movable, in particular elastically preloaded, locking body (40); and
a recess and/or a circumferential groove (42), in particular on a valve shank (44) of the additional valve (26), into which the locking body (40) engages in the open state of the additional valve (26) in order to hold the additional valve (26) open; and/or
an arresting force of the arresting device has a magnetic force and/or the arresting device has a magnet.

10. The device according to any of the preceding claims, wherein:
a flow cross section that can be opened by the additional valve (26) is smaller than a flow cross section that can be opened by the at least one inlet valve (12); and/or
the additional valve (26) is smaller than the multiple gas exchange valves (12, 14); and/or
a valve disc (46) of the additional valve (26) is smaller than a valve disc of the multiple gas exchange valves (12, 14).

11. The device according to any of the preceding claims, wherein:
the additional valve (26) opens with a time delay in relation to the at least one inlet valve (12); and/or
a travel of the additional valve (26) is shorter than a travel of the at least one inlet valve (12) which is actuated by the valve drive (28).

12. The device according to any of the preceding claims, wherein:
a check valve (54) which is provided so as to be fluidically connected downstream of the additional valve (26).

13. The device according to any of the preceding claims, wherein:
the additional valve (26) is preloaded in the direction of a closed position, in particular by means of a valve spring (36); and/or
the additional valve (26) and/or the check valve (54) is arranged in a cylinder head of the cylinder unit (10); and/or
the valve drive (28) has the rocker lever (30), the finger-type rocker or the tappet operatively connected between a camshaft (32) and the additional valve (26) and the at least one inlet valve (12) (12) .

14. The device according to any of the preceding claims, wherein:
the additional valve (26) is arranged so as to be movable from an open position in the direction of a closed position as a result of contact with a piston (22), which is moving towards a top dead centre of a piston movement, of the cylinder unit (10).

15. A motor vehicle, in particular utility vehicle, having:
an internal combustion engine (50) with one or more devices according to any of the preceding claims;
and optionally:
a compressed-air accumulator (52) which is arranged so as to be fluidically connected downstream of the additional valve (26) and/or the check valve (54).

## Revendications

1. Dispositif de génération d'air comprimé pour un moteur à combustion interne (50) pour un véhicule automobile, en particulier un véhicule utilitaire, comprenant :
plusieurs soupapes d'échange de gaz (12, 14) servant à l'amenée d'air de combustion jusqu'à une unité de cylindre (10) du moteur à combustion interne (50) et à l'évacuation de gaz d'échappement hors de l'unité de cylindre (10) ;
une soupape auxiliaire (26) servant au prélèvement d'air comprimé de l'unité de cylindre (10) ; et
une commande de soupapes (28) qui est en liaison fonctionnelle avec au moins une soupape d'admission (12) des plusieurs soupapes d'échange de gaz (12, 14) pour l'actionnement de l'au moins une soupape d'admission (12) et en liaison fonctionnelle avec la soupape auxiliaire (26) pour l'actionnement de la soupape auxiliaire (26), **caractérisé en ce que**
la soupape auxiliaire (26) est actionnée par un culbuteur de soupape d'admission, un levier oscillant de soupape d'admission ou un poussoir de soupape d'admission.

2. Dispositif selon la revendication 1, dans lequel : la soupape auxiliaire (26) et au moins la soupape d'admission (12) des plusieurs soupapes d'échange de gaz (12, 14) sont actionnées conjointement par le biais de la commande de soupapes (28).

3. Dispositif selon la revendication 1 ou la revendication 2, dans lequel la commande de soupapes (28) comprend un dispositif de course à vide (34) qui :
est réalisé pour activer, pour désactiver et/ou pour mettre en marche un actionnement de la soupape auxiliaire (26) par le biais de la commande de soupapes (28) ; et/ou est réalisé sous forme de dispositif de course à vide hydraulique ; et/ou
est réalisé pour activer, pour désactiver et/ou pour mettre en marche un actionnement de la soupape auxiliaire (26) par le biais de la commande de soupapes (28) dans le fonctionnement de non allumage de l'unité de cylindre (10), dans le fonctionnement à vide de l'unité de cylindre (10) et/ou dans le fonctionnement d'allumage de l'unité de cylindre (10).

4. Dispositif selon l'une des revendications précédentes, dans lequel :
la soupape auxiliaire (26) peut être actionnée par la commande de soupapes (28) de telle sorte qu'elle ne s'ouvre en particulier que pendant le temps d'admission ; et/ou
la soupape auxiliaire (26) peut être actionnée par la commande de soupapes (28) de telle sorte qu'elle ne s'ouvre qu'après le début d'un temps d'admission et/ou après un point mort haut d'un déplacement de piston pendant le temps d'admission ; et/ou
la soupape auxiliaire (26) peut être actionnée par la commande de soupapes (28) de telle sorte qu'elle ne s'ouvre qu'après au moins la soupape d'admission (12) des plusieurs soupapes d'échange de gaz (12, 14) ; et/ou
la soupape auxiliaire (26) peut être actionnée par la commande de soupapes (28) de telle sorte qu'elle ne s'ouvre qu'après un chevauchement des plusieurs soupapes d'échange de gaz (12, 14).

5. Dispositif selon l'une des revendications précédentes, dans lequel :
la soupape auxiliaire (26) peut être fermée de manière pneumatique, en particulier par une pression de cylindre dans l'unité de cylindre (10) ; et/ou
la soupape auxiliaire (26) peut être actionnée de manière mécanique et pneumatique.

6. Dispositif selon l'une des revendications précédentes, comprenant en outre :
un dispositif de blocage (38) par le biais duquel la soupape auxiliaire (26) peut être maintenue dans une position d'ouverture, en particulier même lorsque la commande de soupapes (28) ferme déjà ou a déjà fermé l'au moins une soupape d'admission (12).

7. Dispositif selon la revendication 6, dans lequel :
la soupape auxiliaire (26) peut être maintenue par le biais du dispositif de blocage (38) dans la position d'ouverture jusqu'à ce qu'une force agissant sur la soupape auxiliaire (26) en raison d'une pression de cylindre dans l'unité de cylindre (10) surmonte une force de blocage du dispositif de blocage (38) ; et/ou
le dispositif de blocage (38) est réalisé de telle sorte qu'une force de blocage peut être surmontée pendant le temps de compression par la force agissant sur la soupape auxiliaire (26) en raison d'une pression de cylindre dans l'unité de cylindre (10) ; et/ou
le dispositif de blocage (38) est réalisé de telle sorte qu'une force de blocage est surmontée par la force agissant sur la soupape auxiliaire (26) en raison d'une pression de cylindre dans une plage supérieure à 12 bars, 15 bars, 18 bars, 20 bars, 22 bars et/ou 25 bars.

8. Dispositif selon la revendication 6 ou la revendication 7, dans lequel :
le dispositif de blocage (38) est réalisé de telle sorte qu'il ferme la soupape auxiliaire (26) toujours pour la même pression de cylindre ; et/ou
le dispositif de blocage (38) est réalisé de telle sorte qu'il ferme la soupape auxiliaire (26) indépendamment d'un régime du moteur à combustion interne (50), d'une pression de suralimentation du moteur à combustion interne (50) et/ou d'un rapport de compression de l'unité de cylindre (10).

9. Dispositif selon l'une des revendications 6 à 8, le dispositif de blocage (38) comprenant :
un corps de verrouillage (40) déplaçable, en particulier précontraint élastiquement ; et
un évidement et/ou une rainure périphérique (42), en particulier sur une tige (44) de la soupape auxiliaire (26), évidement ou rainure dans lequel/laquelle le corps de verrouillage (40) vient en prise dans l'état d'ouverture de la soupape auxiliaire (26) pour maintenir ouverte la soupape auxiliaire (26) ; et/ou
une force de blocage du dispositif de blocage comprend une force magnétique et/ou le dispositif de blocage comprend un aimant.

10. Dispositif selon l'une des revendications précédentes, dans lequel :
une section transversale d'écoulement pouvant être ouverte par la soupape auxiliaire (26) est inférieure à une section transversale d'écoulement pouvant être ouverte par l'au moins une soupape d'admission (12) ; et/ou
la soupape auxiliaire (26) est plus petite que les plusieurs soupapes d'échange de gaz (12, 14) ;
et/ou
une tête (46) de la soupape auxiliaire (26) est plus petite qu'une tête des plusieurs soupapes d'échange de gaz (12, 14).

11. Dispositif selon l'une des revendications précédentes, dans lequel :
la soupape auxiliaire (26) s'ouvre de manière retardée par rapport à l'au moins une soupape d'admission (12) ; et/ou
une course de la soupape auxiliaire (26) est inférieure à une course de l'au moins une soupape d'admission (12) qui est actionnée par la commande de soupapes (28).

12. Dispositif selon l'une des revendications précédentes, dans lequel :
une soupape anti-retour (54) qui est prévue en liaison fluidique en aval de la soupape auxiliaire (26).

13. Dispositif selon l'une des revendications précédentes, dans lequel :
la soupape auxiliaire (26) est précontrainte en direction d'une position de fermeture, en particulier au moyen d'un ressort de soupape (36) ; et/ou
la soupape auxiliaire (26) et/ou la soupape anti-retour (54) est/sont disposée (s) dans une tête de cylindre de l'unité de cylindre (10) ; et/ou
la commande de soupapes (28) comprend le culbuteur (30), le levier oscillant ou le poussoir en liaison fonctionnelle entre un arbre à cames (32) et la soupape auxiliaire (26) ainsi que l'au moins une soupape d'admission (12) (12) .

14. Dispositif selon l'une des revendications précédentes, dans lequel :
la soupape auxiliaire (26) est disposée de telle sorte qu'elle peut être déplacée à partir d'une position d'ouverture en direction de sa position de fermeture par contact avec un piston (22) de l'unité de cylindre (10), lequel piston se déplace jusqu'à un point mort haut d'un déplacement de piston.

15. Véhicule automobile, en particulier véhicule utilitaire, comprenant :
un moteur à combustion interne (50) doté d'un ou plusieurs dispositifs selon l'une des revendications précédentes ; et éventuellement :
un accumulateur d'air comprimé (52) qui est disposé en liaison fluidique en aval de la soupape auxiliaire (26) et/ou de la soupape anti-retour (54).
